# EUROPÄISCHE PATENTSCHRIFT

(11) **EP 3 822 075 B1**
(45) Veröffentlichungstag und Bekanntmachung des Hinweises auf die Patenterteilung: **30.07.2025**
(21) Anmeldenummer: 19020640.9
(22) Anmeldetag: 15.11.2019
(51) Int. Cl.: B32B 7/12, B32B 27/08, B32B 27/30, B65D 35/08, B32B 1/08

(54) **TUBE**
TUBE
TUBE

(43) Veröffentlichungstag der Anmeldung: 19.05.2021
(73) Patentinhaber: TUPACK Verpackungen Gesellschaft m.b.H., 1110 Wien (AT)
(72) Erfinder: BRIDL, Karl, A-1030 Wien (AT)
(74) Vertreter: SONN Patentanwälte GmbH & Co KG

(56) Entgegenhaltungen:
- EP-A1- 0 652 839
- EP-B1- 0 652 839
- EP-B1- 2 874 811
- WO-A1-2006/013276
- JP-A- 2003 267 431
- JP-A- 2006 240 666
- JP-A- 2014 097 629
- US-A- 5 316 826
- US-A1- 2015 020 841

## Beschreibung

Die Erfindung betrifft eine Tube zur Aufnahme eines flüssigen oder pastösen Produkts umfassend einen mehrschichtigen Tubenmantel, wobei der Tubenmantel eine oder mehrere äußere Schicht(en) aus Polyolefin, eine oder mehrere innere Schicht(en) aus Polyolefin und eine zwischen der bzw. den äußeren Schicht(en) und der bzw. den inneren Schicht(en) angeordnete Sperrschicht umfasst, wobei die Sperrschicht aus einem Ethylen-Vinylalkohol-Copolymer (EVOH) besteht.

Kunststofftuben werden beispielsweise im Bereich der Kosmetik und Körperpflege als Behältnisse für flüssige oder pastöse Erzeugnisse eingesetzt. So werden Tuben beispielsweise zur Aufnahme von Zahnpasta, Cremes und dergleichen verwendet. Darüber hinaus werden Tuben im Bereich der Arzneimittel eingesetzt, um mit pharmazeutischen Wirkstoffen versetzte Cremes oder Gels aufzunehmen.

Bei Kunststofftuben besteht allerdings die Gefahr, dass die in der Tube aufbewahrten Erzeugnisse bzw. deren flüchtige Bestandteile durch den Kunststoff hindurch diffundieren. Dies kann zumindest bei längerer Lagerung zu einem Austrocknen des Erzeugnisses, zu einem Verlust von Aromastoffen oder zu einer verminderten Wirkung pharmazeutischer Wirkstoffe führen.

Kunststofftuben, bei denen ein Hindurchdiffundieren des Tubeninhalts oder von Teilen davon durch den Tubenmantel verringert werden soll, weisen einen Tubenmantel auf, der aus einer äußeren Schicht aus einem Polyolefin, einer inneren Schicht ebenfalls aus einem Polyolefin und einer Sperrschicht besteht. Die Sperrschicht kann aus einem Ethylen-Vinylalkohol-Copolymer (EVOH) bestehen. Mit einem so hergestellten Tubenmantel wird die Tubenschulter verbunden. Diese Tubenschulter besteht ebenfalls aus einem Polyolefin und wird entweder als separates Teil hergestellt und sodann mit dem Tubenmantel verschweißt oder spritztechnisch an den Tubenmantel angeformt.

Neben dem Erfordernis einer ausreichenden Sperrwirkung ist man bestrebt, das Gewicht von Kunststofftuben zu minimieren. Dies reduziert einerseits die Transportkosten und verringert andererseits den Materialverbrauch, was wiederum die Umweltbelastung reduziert. Die Verringerung des Tubengewichts kann beispielsweise durch die Wahl einer geringen Manteldicke erreicht werden. Dadurch wird die Tube jedoch potentiell unstabil. Je dünner der Tubenmantel ist, desto eher können außerdem Bestandteile des Tubeninhalts durch den Tubenmantel hindurchdiffundieren. JP2003267431 Bezieht sich auf einen mehrschichtigen Flasche mit hervorragenden Sauerstoff- und Feuchtigkeitsbarriereeigenschaften.

Der Erfindung liegt daher die Aufgabe zugrunde, eine Tube bereitzustellen, die ein möglichst geringes Gewicht aufweist, gleichzeitig aber formstabil ist und möglichst gute Barriereeigenschaften aufweist.

Zur Lösung dieser Aufgabe ist eine Tube der eingangs genannten Art erfindungsgemäß dahingehend weitergebildet, dass das Ethylen-Vinylalkohol-Copolymer (EVOH) der Sperrschicht einen Ethylengehalt von < 28 mol% aufweist und
die Dicke der Sperrschicht ≤ 25 µm beträgt.

Durch die Wahl eines bestimmten Materials für die Sperrschicht, nämlich eines Ethylen-Vinylalkohol-Copolymers mit einem Ethylengehalt von < 28 mol%, ermöglicht es die Erfindung eine Tube gleichzeitig mit einem geringen Gewicht und mit einer ausreichenden Eigenstabilität auszubilden. Die Erfindung macht sich hierbei den Effekt zunutze, dass ein Ethylengehalt von < 28 mol% einerseits eine verbesserte Barriereeigenschaft der Sperrschicht und andererseits eine höhere Eigenstabilität gewährleistet. Es wurde gefunden, dass dies eine Sperrschicht mit einer Dicke von lediglich 25µm oder weniger ermöglicht ohne dass die Sperrschicht ihre Barriereeigenschaft verliert. Insbesondere ist die Barriereeigenschaft der erfindungsgemäßen Sperrschicht für die Aufnahme üblicher Erzeugnisse im kosmetischen und/oder pharmazeutischen Bereich ausreichend, um eine Lagerfähigkeit von z.B. 1 Jahr oder mehr zu erreichen. Die Dicke der Sperrschicht kann bevorzugt jeden beliebigen Wert im Bereich 5-25 µm annehmen, beispielsweise Werte von 5, 6, 7, 8, 9, 10, 11, 12, 13, 14, 15, 16, 17, 18, 19, 20, 21, 22, 23, 34 und 25 µm. Bevorzugt liegt die Dicke der Sperrschicht zwischen 5 und 25 µm, bevorzugter zwischen 5 und 20 µm, wie z.B. zwischen 10 und 20 µm.

Der Ethylengehalt des Ethylen-Vinylalkohol-Copolymers der Sperrschicht kann < 28 mol% betragen. Der untere Grenzwert des Ethylengehalts kann beispielsweise 20 mol% betragen.

Da Ethylen-Vinylalkohol-Copolymer mit bestimmten Polyolefinen keine mechanisch feste Verbindung eingeht, ist es vorteilhaft bzw. erforderlich, zwischen der Sperrschicht und den Polyolefinschichten Haftvermittlerschichten vorzusehen. Eine bevorzugte Ausführung der Erfindung sieht daher vor, dass zu beiden Seiten der Sperrschicht in direktem Kontakt mit derselben jeweils eine Haftvermittlungsschicht angeordnet ist.

Bevorzugt beträgt die Dicke der Haftvermittlungsschicht jeweils 5-25 µm, bevorzugt 10-20 µm. Insbesondere kann die Dicke jeder Haftvermittlungsschicht gleich der Dicke der Sperrschicht gewählt sein.

Um eine leichtgewichtige Tube zu erzielen, sieht eine bevorzugte Ausbildung vor, dass die eine oder mehreren äußere(n) Schicht(en) eine Gesamtdicke von 80-300 µm aufweist bzw. aufweisen.

Weiters ist bevorzugt vorgesehen, dass die eine oder mehreren innere(n) Schicht(en) eine Gesamtdicke von 80-300 µm aufweist bzw. aufweisen.

Insbesondere beträgt die Gesamtdicke des Tubenmantels 200-600 µm, bevorzugt 300-400µm oder 200-400µm. Die genannte Gesamtdicke kann bevorzugt dadurch erzielt werden, dass die Gesamtdicke der einen oder mehreren äußeren Schicht(en) im Bereich 80-300µm, die Gesamtdicke der einen oder mehreren inneren Schicht(en) im Bereich 80-300µm und die Dicke der Sperrschicht ≤ 25µm, insbesondere 10-20µm, gewählt wird.

Dabei hat sich gezeigt, dass die erfindungsgemäße Sperrschicht auch bei einer Tube mit einer Dicke des Tubenmantels im oben genannten Bereich eine ausreichende Sperrwirkung aufweist.

Der mehrschichtige Tubenmantel kann eine oder zwei innere Schichten und eine oder zwei äußere Schichten aufweisen.

Der mehrschichtige Tubenmantel kann unterschiedliche Abfolgen von Kunststoffschichten aufweisen und kann beispielsweise aus den folgenden Schichten bestehen:
- Innere Schicht - Haftvermittlerschicht - Sperrschicht - Haftvermittlerschicht - äußere Schicht,
- Innere Schicht #1 - innere Schicht #2 - Haftvermittlerschicht - Sperrschicht - Haftvermittlerschicht - äußere Schicht,
- Innere Schicht #1 - innere Schicht #2 - Haftvermittlerschicht - Sperrschicht - Haftvermittlerschicht - äußere Schicht #1 - äußere Schicht #2,
- Innere Schicht - Haftvermittlerschicht - Sperrschicht - Haftvermittlerschicht - äußere Schicht #1 - äußere Schicht #2.

Der Anteil der Dicke der einen oder mehreren äußeren Schicht(en) und der Anteil der Dicke der einen oder mehreren inneren Schicht(en) an der Gesamtdicke des Tubenmantels kann den jeweiligen Bedürfnissen entsprechend gewählt werden. Bevorzugt beträgt die Gesamtdicke der einen oder mehreren äußeren Schicht(en) 30-70% der Gesamtdicke des Tubenmantels. Bevorzugt beträgt die Gesamtdicke der einen oder mehreren inneren Schicht(en) 30-70% der Gesamtdicke des Tubenmantels.

Wie an sich bekannt, ist der Tubenmantel bevorzugt durch Koextrusion hergestellt.

Hinsichtlich des Materials der inneren und der äußeren Schicht(en) können grundsätzlich beliebige Polyolefine verwendet werden. Beispiele für geeignete Polyolefine umfassen Polyethylen und Polypropylen.

Bevorzugt ist hierbei vorgesehen, dass die eine oder mehreren äußere(n) Schicht(en) aus Polyethylen (PE) besteht bzw. bestehen. Bevorzugt kann weiters vorgesehen sein, dass die eine oder mehreren innere(n) Schicht(en) aus Polyethylen (PE) besteht bzw. bestehen.

Um die Eigenstabilität des Tubenmantels weiter zu erhöhen, wird bevorzugt so vorgegangen, dass das Polyethylen der einen oder mehreren äußeren Schicht(en) und/oder der einen oder mehreren inneren Schicht(en) einen Anteil von wenigstens 20 Gew.-%, bevorzugt wenigstens 30 Gew.-%, bevorzugt wenigstens 40 Gew.-%, w bevorzugt wenigstens 50 Gew.-% Polyethylen hoher Dichte (PE-HD) mit einem spezifischen Gewicht zwischen 0,935 und 0,97 g/cm³ aufweist. Insbesondere ist hierbei vorgesehen, dass der Tubenmantel insgesamt einen Anteil von wenigstens 20 Gew.-%, bevorzugt wenigstens 30 Gew.-%, bevorzugt wenigstens 40 Gew.-%, w bevorzugt wenigstens 50 Gew.-% Polyethylen hoher Dichte (PE-HD) mit einem spezifischen Gewicht zwischen 0,935 und 0,97 g/cm³ aufweist.

Der gewünschte Anteil von wenigstens 20 Gew.-% Polyethylen hoher Dichte (PE-HD) kann beispielswiese dadurch erreicht werden, dass der Tubenmantel zusätzlich zu wenigstens einer äußeren und/oder inneren Schicht bestehend aus oder enthaltend Polyethylen hoher Dichte (PE-HD) auch wenigstens eine innere und/oder äußere Schicht bestehend aus einem oder enthaltend ein Polyethylen geringer Dichte (PE-LD) mit einem spezifischen Gewicht zwischen 0,915 g/cm³ und 0,935 g/cm³ oder wenigstens eine innere oder äußere Schicht bestehend aus oder enthaltend lineares Polyethylen niederer Dichte (PE-LLD) aufweist.

Der Außendurchmesser des Tubenmantels kann in Abhängigkeit vom gewünschten Tubenvolumen gewählt werden. Bevorzugt weist der Tubenmantel einen Außendurchmesser von 13-60 mm auf.

Die Erfindung wird anhand der folgenden Ausführungsbeispiele näher erläutert.

### Beispiel 1 : (Nicht gemäß der vorliegenden Erfindung)

Es wurde eine Tubenmantel mit dem folgenden Aufbau durch Koextrudieren hergestellt:

| **Schicht** | **Material** | **Dicke** |
|---|---|---|
| Äußere Schicht | 80% PE-LLD, 20% PE-LD | 120µm |
| Sperrschicht | EVOH (EVAL F101B der Fa. EVAL Europe N.V.) mit einem Ethylengehalt vom 32 mol% | 20µm |
| Innere Schicht | 50% PE-HD, 50% PE-LLD | 120µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 20 µm angeordnet. Die Wandstärke betrug somit 300µm.

### Beispiel 2 : (Nicht gemäß der vorliegenden Erfindung)

Es wurde eine Tubenmantel mit dem folgenden Aufbau durch Koextrudieren hergestellt:

| **Schicht** | **Material** | **Dicke** |
|---|---|---|
| Äußere Schicht | 80% PE-LLD, 20% PE-LD | 220µm |
| Sperrschicht | EVOH (EVAL F101B der Fa. EVAL Europe N.V.) mit einem Ethylengehalt vom 32 mol% | 20µm |
| Innere Schicht | 50% PE-HD, 50% PE-LLD | 220µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 20 µm angeordnet. Die Wandstärke betrug somit 500µm.

### Beispiel 3:

| **Schicht** | **Material** | **Dicke** |
|---|---|---|
| Äußere Schicht | 80% PE-LLD, 20% PE-LD | 135µm |
| Sperrschicht | EVOH (EVAL L171B der Fa. EVAL Europe N.V. mit einem Ethylengehalt vom 27 mol%) | 10µm |
| Innere Schicht | 50% PE-HD, 50% PE-LLD | 135µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 10 µm angeordnet. Die Wandstärke betrug somit 300µm.

### Beispiel 4:

Es wurde eine Tubenmantel mit dem folgenden Aufbau durch Koextrudieren hergestellt:

| **Schicht** | **Material** | **Dicke** |
|---|---|---|
| Äußere Schicht | 80% PE-LLD, 20% PE-LD | 235µm |
| Sperrschicht | EVOH (EVAL L171B der Fa. EVAL Europe N.V. mit einem Ethylengehalt vom 27 mol%) | 10µm |
| Innere Schicht | 50% PE-HD, 50% PE-LLD | 235µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 10 µm angeordnet. Die Wandstärke betrug somit 500µm.

### Beispiel 5:

Es wurde eine Tubenmantel mit dem folgenden Aufbau durch Koextrudieren hergestellt:

| **Schicht** | **Material** | **Dicke** |
|---|---|---|
| Äußere Schicht | 80% PE-LLD, 20% PE-LD | 120µm |
| Sperrschicht | EVOH (EVAL L171B der Fa. EVAL Europe N.V. mit einem Ethylengehalt vom | 20µm |
| | 27 mol%) | |
| Innere Schicht | 50% PE-HD, 50% PE-LLD | 120µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 20 µm angeordnet. Die Wandstärke betrug somit 300µm.

### Beispiel 6:

Es wurde eine Tubenmantel mit dem folgenden Aufbau durch Koextrudieren hergestellt:

| **Schicht** | **Material** | **Dicke** |
|---|---|---|
| Äußere Schicht | 80% PE-LLD, 20% PE-LD | 220µm |
| Sperrschicht | EVOH (EVAL L171B der Fa. EVAL Europe N.V. mit einem Ethylengehalt vom 27 mol%) | 20µm |
| Innere Schicht | 50% PE-HD, 50% PE-LLD | 220µm |

Der Außendurchmesser des Tubenmantels betrug 40mm, die Mantellänge 107mm. Zwischen der inneren Schicht und der Sperrschicht sowie zwischen der äußeren Schicht und der Sperrschicht war jeweils eine Haftvermittlerschicht (Admer NF 498E der Fa. Mitsui Chemicals Europe GmbH) mit einer Dicke von 20 µm angeordnet. Die Wandstärke betrug somit 500µm.

Die nach den in den Beispielen 2-6 angegebenen Spezifikationen hergestellten Tubenmäntel wurden im Hinblick auf ihre Barriereeigenschaften und ihre Eigenstabilität geprüft. Die Prüfung der Sauerstofftransmission wurde in Anlehnung an folgende Norm durchgeführt: DIN 53380-3 Bestimmung der Gasdurchlässigkeit; Teil 3: Sauerstoffspezifisches Trägergas-Verfahren zur Messung an Kunststoff-Folien und Kunststoff-Formteilen. Der Probenkörper wird auf einer Seite (außen) unter Atmosphärendruck mit Testgas mit einem bestimmten Sauerstoffgehalt beaufschlagt. Auf der anderen Seite (innen) des Probenkörpers, die dicht von der ersten Seite getrennt ist, wird der hindurchdiffundierte Sauerstoff vom Trägergas (N₂) "mitgenommen" und zu einem O₂-Sensor transportiert. Die Temperatur der Probe bzw. der Probenkammer wurde mit 40°C eingestellt und der Feuchtegehalt des Testgases betrug 0%.

Es wurden die folgenden O₂-Transmissionswerte gemessen:

| Beisp. | Dicke der Sperrschicht [µm] | Wandstärke des Tubenmantels [µm] | Ethylengehalt [mol%] | O2-Transmission [cm3/Tube/Tag] |
|---|---|---|---|---|
| 2 | 20 | 500 | 32 | 0, 0058 |
| 3 | 10 | 300 | 27 | 0, 0029 |
| 4 | 10 | 500 | 27 | 0, 0022 |
| 5 | 20 | 300 | 27 | 0,0014 |
| 6 | 20 | 500 | 27 | 0,0012 |

Es zeigte sich, dass die Tubenmäntel eine ausreichende Barriereeigenschaft aufwiesen. Insbesondere zeigte sich der Einfluss des Ethylengehalts auf die Barriereeigenschaft der Sperrschicht, wobei z.B. ein Vergleich der Beispiele 2 und 3 ersichtlich macht, dass die O₂-Transsmission der Tube gemäß Beispiel 3 deutlich geringer ist, obwohl sowohl die Dicke der Sperrschicht als auch die Wandstärke des Tubenmantels beim Beispiel 2 größer ist.

## Patentansprüche

1. Tube zur Aufnahme eines flüssigen oder pastösen Produkts umfassend einen mehrschichtigen Tubenmantel, wobei der Tubenmantel eine oder mehrere äußere Schicht(en) aus Polyolefin, eine oder mehrere innere Schicht(en) aus Polyolefin und eine zwischen der bzw. den äußeren Schicht(en) und der bzw. den inneren Schicht(en) angeordnete Sperrschicht umfasst, wobei die Sperrschicht aus einem Ethylen-Vinylalkohol-Copolymer (EVOH) besteht, **dadurch gekennzeichnet, dass** das Ethylen-Vinylalkohol-Copolymer der Sperrschicht einen Ethylengehalt von < 28 mol% aufweist und die Dicke der Sperrschicht ≤ 25 µm beträgt.

2. Tube nach Anspruch 1, **dadurch gekennzeichnet, dass** die Dicke der Sperrschicht zwischen 5 und 25 µm liegt.

3. Tube nach Anspruch 1 oder 2, **dadurch gekennzeichnet, dass** zu beiden Seiten der Sperrschicht in direktem Kontakt mit derselben jeweils eine Haftvermittlungsschicht angeordnet ist.

4. Tube nach Anspruch 1, 2 oder 3, **dadurch gekennzeichnet, dass** die Dicke der Haftvermittlungsschicht 5-25 µm, bevorzugt 10-20 µm beträgt.

5. Tube nach einem der Ansprüche 1 bis 4, **dadurch gekennzeichnet, dass** die eine oder mehreren äußere(n) Schicht(en) eine Gesamtdicke von 80-300 µm aufweist bzw. aufweisen.

6. Tube nach einem der Ansprüche 1 bis 5, **dadurch gekennzeichnet, dass** die eine oder mehreren innere(n) Schicht(en) eine Gesamtdicke von 80-300 µm aufweist bzw. aufweisen.

7. Tube nach einem der Ansprüche 1 bis 6, **dadurch gekennzeichnet, dass** die Gesamtdicke des Tubenmantels 200-600 µm beträgt.

8. Tube nach einem der Ansprüche 1 bis 7, **dadurch gekennzeichnet, dass** die Gesamtdicke der einen oder mehreren äußeren Schicht(en) 30-70% der Gesamtdicke des Tubenmantels beträgt.

9. Tube nach einem der Ansprüche 1 bis 8, **dadurch gekennzeichnet, dass** die Gesamtdicke der einen oder mehreren inneren Schicht(en) 30-70% der Gesamtdicke des Tubenmantels beträgt.

10. Tube nach einem der Ansprüche 1 bis 9, **dadurch gekennzeichnet, dass** der Tubenmantel durch Koextrusion hergestellt ist.

11. Tube nach einem der Ansprüche 1 bis 10, **dadurch gekennzeichnet, dass** die eine oder mehreren äußere(n) Schicht(en) aus Polyethylen (PE) besteht bzw. bestehen.

12. Tube nach einem der Ansprüche 1 bis 11, **dadurch gekennzeichnet, dass** die eine oder mehreren innere(n) Schicht(en) aus Polyethylen (PE) besteht bzw. bestehen.

13. Tube nach Anspruch 12, **dadurch gekennzeichnet, dass** das Polyethylen der einen oder mehreren äußeren Schicht(en) und/oder der einen oder mehreren inneren Schicht(en) einen Anteil von wenigstens 20 Gew.-% Polyethylen hoher Dichte (PE-HD) mit einem spezifischen Gewicht zwischen 0,935 und 0,97 g/cm³ aufweist.

14. Tube nach einem der Ansprüche 1 bis 13, **dadurch gekennzeichnet, dass** der Tubenmantel einen Außendurchmesser von 13-60 mm, bevorzugt 25-50 mm aufweist.

## Claims

1. A tube for receiving a liquid or pasty product comprising a multilayered tube jacket, the tube jacket having one or more outer layer(s) made of polyolefin, one or more inner layer(s) made of polyolefin and a barrier layer arranged between the outer layer(s) and the inner layer(s), wherein the barrier layer consists of an ethylene-vinyl alcohol copolymer (EVOH), **characterized in that** the ethylene-vinyl alcohol copolymer of the barrier layer has an ethylene content of <28 mol% and the thickness of the barrier layer is ≤ 25 µm.

2. The tube according to claim 1, **characterized in that** the thickness of the barrier layer is between 5 and 25 µm.

3. The tube according to claim 1 or 2, **characterized in that** a bonding layer is arranged on both sides of the barrier layer in direct contact with the same.

4. The tube according to claim 1, 2 or 3, **characterized in that** the thickness of the bonding layer is 5-25 µm, preferably 10-20 µm.

5. The tube according to any one of claims 1 to 4, **characterized in that** the one or more outer layer(s) has or have a total thickness of 80-300 µm.

6. The tube according to any one of claims 1 to 5, **characterized in that** the one or more inner layer(s) has or have a total thickness of 80-300 µm.

7. The tube according to any one of claims 1 to 6, **characterized in that** the tube jacket has a total thickness of 200-600 µm.

8. The tube according any one of claims 1 to 7, **characterized in that** the total thickness of the one or more outer layer(s) is 30-70% of the total thickness of the tube jacket.

9. The tube according to any one of claims 1 to 8, **characterized in that** the total thickness of the one or more inner layer(s) is 30-70% of the total thickness of the tube jacket.

10. The tube according to any one of claims 1 to 9, **characterized in that** the tube jacket is produced by coextrusion.

11. The tube according to any one of claims 1 to 10, **characterized in that** the one or more outer layer(s) consist(s) of polyethylene (PE).

12. The tube according to any one of claims 1 to 11, **characterized in that** the one or more inner layer(s) consist(s) of polyethylene (PE).

13. The tube according to claim 12, **characterized in that** the polyethylene of the one or more outer layer(s) and/or of the one or more inner layer(s) has a proportion of at least 20% by weight of high-density polyethylene (PE-HD) with a specific weight between 0.935 and 0.97 g/cm3.

14. The tube according to any one of claims 1 to 13, **characterized in that** the tube jacket has an outer diameter of 13-60 mm, preferably 25-50 mm.

## Revendications

1. Tube pour recevoir un produit liquide ou pâteux comprenant une enveloppe de tube multicouche, dans laquelle l'enveloppe du tube comprend une ou plusieurs couche(s) extérieure(s) en polyoléfine, une ou plusieurs couche(s) intérieure(s) en polyoléfine et une couche barrière disposée entre la ou les couche(s) extérieure(s) et la ou les couche(s) intérieure(s), dans lequel la couche barrière est constituée d'un copolymère d'éthylène-alcool vinylique (EVOH), **caractérisé en ce que** le copolymère d'éthylène-alcool vinylique de la couche barrière a une teneur en éthylène de < 28 % molaire et l'épaisseur de la couche barrière est ≤ 25 µm.

2. Tube selon la revendication 1, **caractérisé en ce que** l'épaisseur de la couche barrière est comprise entre 5 et 25 µm.

3. Tube selon la revendication 1 ou 2, **caractérisé en ce qu'**une couche d'adhésion est disposée de chaque côté de la couche barrière en contact direct avec celle-ci.

4. Tube selon la revendication 1, 2 ou 3, **caractérisé en ce que** l'épaisseur de la couche d'adhésion est de 5-25 µm, de préférence 10-20 µm.

5. Tube selon l'une des revendications 1 à 4, **caractérisé en ce que** l'une ou les plusieurs couche(s) extérieure(s) présente(nt) une épaisseur totale de 80-300 µm.

6. Tube selon l'une des revendications 1 à 5, **caractérisé en ce que** l'une ou les plusieurs couche(s) intérieure(s) présente(nt) une épaisseur totale de 80-300 µm.

7. Tube selon l'une des revendications 1 à 6, **caractérisé en ce que** l'épaisseur totale de l'enveloppe du tube est de 200-600 µm.

8. Tube selon l'une des revendications 1 à 7, **caractérisé en ce que** l'épaisseur totale de l'une ou des plusieurs couche(s) extérieure(s) représente 30-70% de l'épaisseur totale de l'enveloppe du tube.

9. Tube selon l'une des revendications 1 à 8, **caractérisé en ce que** l'épaisseur totale de l'une ou des plusieurs couche(s) intérieure(s) représente 30-70% de l'épaisseur totale de l'enveloppe du tube.

10. Tube selon l'une des revendications 1 à 9, **caractérisé en ce que** l'enveloppe du tube est fabriquée par coextrusion.

11. Tube selon l'une des revendications 1 à 10, **caractérisé en ce que** l'une ou les plusieurs couche(s) extérieure(s) est ou sont constituée(s) de polyéthylène (PE).

12. Tube selon l'une des revendications 1 à 11, **caractérisé en ce que** l'une ou les plusieurs couche(s) intérieure(s) est ou sont constituée(s) de polyéthylène (PE).

13. Tube selon la revendication 12, **caractérisé en ce que** le polyéthylène de l'une ou des plusieurs couche(s) extérieure(s) et/ou de l'une ou des plusieurs couche(s) intérieure(s) contient une proportion d'au moins 20% en poids de polyéthylène haute densité (PE-HD) avec un poids spécifique entre 0,935 et 0,97 g/ cm³.

14. Tube selon l'une des revendications 1 à 13, **caractérisé en ce que** l'enveloppe du tube a un diamètre extérieur de 13-60 mm, de préférence 25-50 mm.
